# EUROPEAN PATENT APPLICATION

(11) **EP 1 727 328 A1**
(43) Date of publication of application: **29.11.2006**
(21) Application number: 05291132.8
(22) Date of filing: 25.05.2005
(51) Int. Cl.: H04L 29/06, H04L 12/22

(54) **Network node, module therefor and distribution method**

(71) Applicant: ALCATEL, 75008 Paris (FR)
(72) Inventor: Kessler, Marcus, Dr., 70329 Stuttgart (DE); Tomsu, Marco, 71254 Ditzingen (DE); Domschitz, Peter, 70191 Stuttgart (DE); Oberle, Karsten, 68199 Mannheim (DE)
(74) Representative: Bregenzer, Michael

(57) **Abstract**

The invention relates to a network node (R2, D2), a module therefor and a distribution method.

The network node comprises:
- receiving means (RB) for receiving a data stream (CDS) from a content source, in particular a content server (CS), of the network (NET),
- encryption means (EM) for individually encrypting said data stream to a subscriber data stream (SDS1, SDS2, SDS3), the encryption being specific to a subscriber terminal (T1, T2, T3) being coupled or able to be coupled with the network, and
- sending means (SM) for sending the subscriber data stream (SDS1, SDS2, SDS3) to the terminal.

## Description

The invention relates to a network node, a module therefor and a distribution method.

Content provider provide end users with data, for example video data, games or the like. The end users or subscribers are paying for the contents. It is therefore necessary to apply a Digital Rights Management system (DRM) that inter alia :
- ensures that only the usage permissions allowed are enabled,
- ensures that content is not publicly distributed,
- supports encryption and authorised decryption of digital content, including public key management, and
- ensures that only authorised users of content are using the respective content.

In known systems a content source, i.e. a content server, performs the previous mentioned tasks. To this end, the content server is for example encrypting a data stream prior sending that data to a terminal of a subscriber. In other words, due to the necessity of client or a subscriber specific DRM it is necessary to send encrypted data streams from the content server, e.g. a video server, to the individual subscriber terminals which causes in some scenarios a lot of traffic in the network between the content server and the subscriber terminals.

It is therefore an object of the invention to provide an optimized digital rights management in a telecommunications network.

This object is attained by a network node according to the teaching of claim 1, by a module for a network node and a distribution method according to the teaching of further independent claims.

The idea underlining the invention is to separate the encryption of the data streams from the content source or content server. A multicast network node or a module driving such a node distributes a data stream received from the content server to two or more multicast data streams to the respective subscriber data terminals. Additionally, the multicast network node or a further node according to the invention close to the subscriber terminal encrypts each of these subscriber data streams individually and subscriber specific according to an encryption scheme. The encryption is performed at a network location between the point of last multicast splitting and last trusted network location in front of the client, for example a DSLAM location (DSLAM = Digital Subscriber Line Access Multiplexer). As the invention is network based, it may be used by multiple content providers.

The respective encryption is subscriber specific and performed by a device of the telecommunications network separate from the content server which means that for example a subscriber specific encryption scheme may be used for each individual subscriber terminal and the respective content server needs not to be able to perform the different encryption schemes. Furthermore, the traffic in the telecommunications network is reduced, because a data stream, either a unicast or a multicast data stream, is transferred from the content source to the distribution device and subsequently, at the same location or at the last trusted network location in front of the client, subscriber specific encrypted.

Further advantages of the invention are defined in the subclaims.

It is preferred that the network node performs also the function of a distribution or splitting device, i.e. that the network node comprises multicast distribution means to distribute the data stream received from the content source as a first, a second or possibly more subscriber data streams to a first, a second and more subscriber terminals. The encryption means of this network node are able to encrypt the first, the second and the further data streams individually and specifically to the respective first, second and further subscriber terminals.

It shall be noted that the first, second and further subscriber data streams are unicast streams, whereas the data stream directly or indirectly received from the content source may be a unicast or multicast data stream.

Preferably, the network node comprises storage means, e.g. a cache, for the intermediate storage of a data stream of the content source.

The encryption of the network node according to the invention may follow different encryption schemes, for example according to the standard of the Trusted Computing Platform Alliance (TCPA) or to a Public Key Infrastructure (PKI). Furthermore, the encryption means may insert individual or generic watermarks into the respective subscriber data stream, which is also regarded as an encryption in the sense of the invention.

The encryption means are preferably able to receive a respective encryption key from the respective subscriber terminal or from a key server, that stores for example public keys. In an other scenario, the subscriber terminals send their respective keys preferably without request to the network node. However, the network node may also be able to request the encryption keys.

Furthermore, the network node performs preferably authentication functions. Then, the network node comprises authentication means for receiving and checking a respective authentication certificate from the respective subscriber terminal. The encryption key of the terminal may be contained in the authentication certificate.

Preferably the network node is able to permanently store an encryption key assigned to the respective subscriber terminal. For example the network provider may store that key at the network node by means of configuration data.

In order to avoid hijacking the content source or content server encrypt the data stream directed to the network node according to the invention. In a preferred embodiment of the invention, the network node is able to decrypt the data stream of the content source. However, it is also possible, that the network node applies a subscriber terminal individual encryption to the already pre-encrypted or pre-encoded data stream of the content source or server.

The invention will be come more apparent by reference to the following description of several embodiments taken in conjunction with the accompanying drawings in which:
- Fig. 1: is a functional diagram of a telecommunications network with a content server and network nodes in accordance with the invention; and

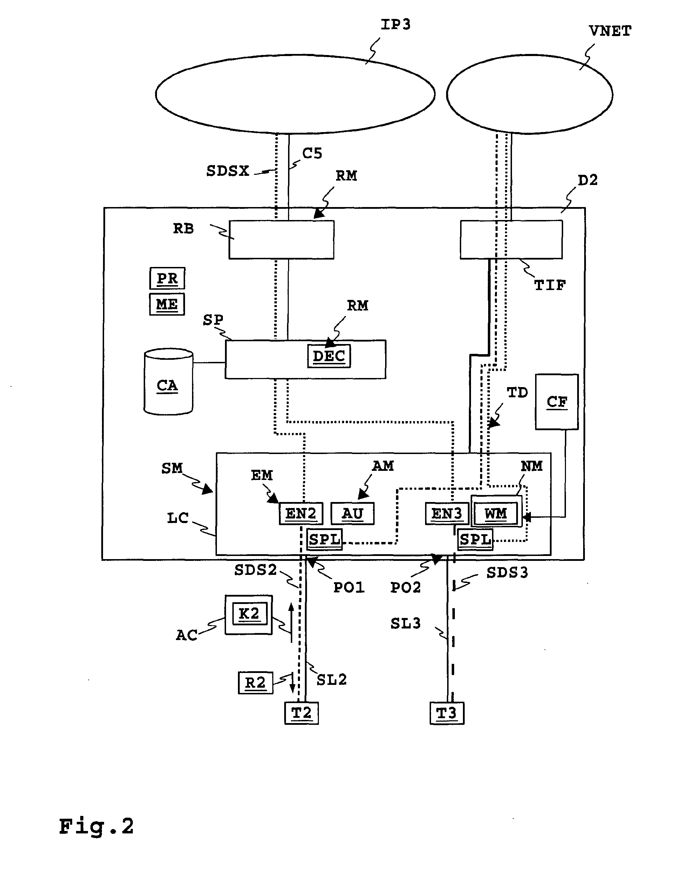

- Fig. 2: is a functional block diagram of one network node of Fig. 1.

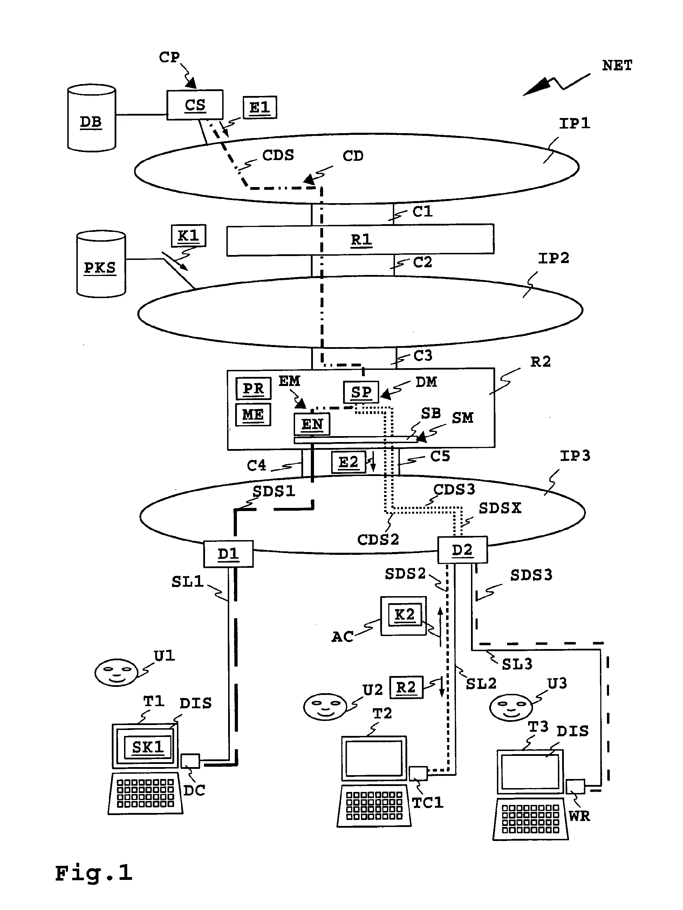

Figure 1 shows a network NET comprising 3 sub-networks or network parts IP1, IP2 and IP3, for example packet oriented networks. The sub-networks IP1, IP2 and IP3 are for example based on TCP/IP (Transmission Control Protocol/Internet Protocol). In the present embodiment, the networks IP1, IP2 are IP core networks of a first and a second provider (IP = Internet Protocol). The sub-network IP3 is an IP aggregation network. The networks IP1, IP2 are connected via a service router R1, the networks IP2 and IP3 are connected by a service router R2.

The service router R1 is connected via connections C1, C2 with the networks IP1, IP2. The router R2 is connected via a connection C3 with the network IP2 and via connections C4, C5 that are parts of the network IP3 with the access devices D1, D2.

A content provider CP provides content data CD, for example video data, audio data or the like by means of a content data stream CDS for terminals T1, T2, T3 of users U1, U2, U3. The terminals T1, T2, T3 comprise for example personal computers and/or set-top boxes or the like. The terminals T1, T2, T3 are connected via subscriber lines SL1, SL2, SL3 with the access devices D1, D2 of the network IP3. The subscriber lines SL1, SL2, SL3 are for example telephone lines and the respective access devices D1, D2 are for example telephone exchanges and comprise for example digital subscriber line access multiplexers (DSLAM), edge routers or the like. DSL modems at the subscriber lines SL1, SL2, SL3 may be comprised in the terminals T1, T2, T3 or be close to them. It is also possible that the subscriber lines SL1, SL2, SL3 are or comprise optical connections, cable TV connections or the like.

In a known scenario, a content server CS would send the content data CD to the terminals T1 - T3 by means of individually encrypted data streams. Then three data streams need to be sent from the content server CS through three networks IP1, IP2, IP3 to the terminals T1, T2 and T3 thereby causing a lot of traffic. However, the network NET has a structure according to the invention that significantly reduces traffic.

The inventive encryption of data, that fulfils at least partly the requirements of a digital rights management (DRM), provides that instead of the content server CS network nodes of the networks NET, in the present embodiment the network nodes R2 and D2, perform a subscriber specific and individual encryption of data separate from the content source, in particular separate from the content server CS.

The network nodes R2, D2 do not act as content servers rather than as encryption units co-operating with the content server or source CS. Therefore, the content data stream CDS for the terminals T1 - T3 is sent down from the content server CS to the inventive network nodes R2 and D2 respectively and at that locations or positions the content data stream CDS is user specific or subscriber specific encrypted. In order to guarantee that only the correct subscribers or clients can receive the content data CD in a usable form, i.e. for displaying at displays of the terminals T1, T2 and T3.

In the inventive architecture of network NET the encryption is separate from the content provision. The network nodes R2, R3 are not able to provide content data without the aid of a content source, in particular of the content server CS.

In the following a near video on demand scenario described: A video content provider is starting the broadcast of an often demanded movie on different channels with a constant time delay, e.g. every 15 minutes, to aggregate a number of customers. The number of channels needed is narrowed down in comparison to a true video on demand service. The content server CS sends the movie as content data CD in the content data stream CDS to a network node that performs multicast splitting of a data stream, in the present embodiment to the service router R2.

The service router R2 comprises a splitter SP working as a distribution means DM splitting the content data stream CDS into e.g. 2 subscriber data streams SDS1, SDSX. A transmitter board SB of sending means SM forwards the subscriber data streams SDS1, SDSX to the access devices D1, D2.

The content server sends for example an encryption instruction E1 that may be included in the content data stream CDS to the router R2 instructing this device to encrypt the content data stream CDS after multicast distribution in order to guarantee that only the correct subscribers or clients can receive the content data CD.

The access device D1 is a conventional DSLAM device not able to perform encryption of the data in contrast to the inventive access device D2. Therefore, the service router R2 encrypts the subscriber data stream SDS1 by means of an encryption function EN prior sending the subscriber data stream SDS1 to the access device D1. The encryption function E1 is a program function with program code that is executed by a processor PR and stored in a memory ME of the network node R2.

In view of the terminals T2, T3 the node R2 needs not to encrypt the content data CD, because the network node or access device D2 is able to do this encryption task.

The encryption function EN is an encryption means EM for individually encrypting the data stream CDS to the subscriber data stream SDS1. The encryption function EN encrypts data according to the Public Key Infrastructure (PKI). The encryption function EN requests a public key K1 from a key server PKS connected to the network IP2. The public key K1 is assigned to a the terminal T1. The encryption function EN encrypts the subscriber data stream SDS1 with the public key K1 of the terminal T1 and the receiving party, the terminal T1, decrypts the subscriber data stream SDS1 by means of its secret key SKI with a decryption function DC, for example a program module executed by the terminal T1. After decryption, the content data CD, in particular the movie, may be displayed at a display DIS of the terminal T1.

The content server CS is preferably encrypting the content data stream CDS prior sending it via the networks IP1, IP2 to the inventive network node R2. If a public key infrastructure (PKI) is used the pre-encrypted content data stream CDS may be encrypted a second time by the encryption function EN. It is not necessary that the service router R2 decrypts the content data stream CDS prior multicast splitting. This task may be done by the terminal T1, in particular its decryption function DC.

In view of the terminals T2, T3 the access device D1 is the last trusted network location in front of these subscribers or clients. The access device D2 performs Digital Rights Management functions, in particular encryption functions according to the invention in relation to the terminals T2, T3 and other terminals not shown in the figure. In this connection it must be said that the router R2 may distribute the content data CD also to further terminals or network nodes not shown in the figure.

In a first scenario, the router R2 splits the content data stream CDS in to not encrypted data streams CDS2, CDS3 for the terminals T2, T3. In this scenario the access device D2 performs the encryption function according to the invention to the data streams CDS2, CDS3. The data streams CDS2, CDS3 contain for example an encryption instruction E2 instructing the access device D2 to a subscriber specific encryption of the data streams CDS2, CDS3. The access device D2 encrypts the data streams CDS2, CDS3 and sends them as encrypted subscriber data streams SDS2, SDS3 to the terminals T2, T3.

In a second scenario the access device D2 performs also multicast distribution or splitting functions. The sending means SM of the router R2 sends a subscriber stream SDSX to be splitted and encrypted by the access device D2 to that device D2. A receiving means RM, in particular a receiver board RB, receives the subscriber data stream SDSX at the connection C5 and forwards the subscriber data stream SDSX to a splitter SP.

Prior splitting the subscriber data stream SDSX into a first and a second subscriber stream SDS2, SDS3, a decryption means DM with a decryption module DEC decrypts the content data CD, that is encrypted according to a PKI scheme by the content server CS. The decryption module DEC is for example a program module with program code executable by a processor PR and stored in a memory ME of the device D2.

In a preferred embodiment the device D2 contains also a storage means CA, for example a cache memory, for intermediate storage of the content data CD.

The receiver board RB is for example a network interface, i.e. an optical interface to an ATM-network (ATM = Asynchronous Transfer Mode). At the subscriber terminal side the device D2 comprises a line card LC performing the task of a receiving and sending means SM.

The line card LC comprises ports PO1, PO2 and further ports not shown for connecting subscriber lines, for example the subscriber lines SL2, SL3 connected with the ports PO1, P02. The ports PO1, PO2 are able to decouple and encouple telephone data, for example a so called ATU-C, received from and sent to a voice network or telephone network VNET, e.g. an ISDN network (Integrated Services Digital Network), via a telephone interface TIF that can preferably performs circuit switching.

Encryption functions EN2, EN3 perform the encryption of the content data CD to be sent to the terminals T2, T3. The encryption functions EN2, EN3 are program functions with program code to be executed by the processor PR and/or by a local processor LP of the line card LC.

The encryption function EN2 encrypts the content data CD according to the TCPA encryption scheme (TCPA = Trusted Computing Platform Alliance).

The terminal T1 comprises a TPM (Trusted Platform Module) containing a so-called Fritz-Chip or decryption chip TC1. The chip TC1 performs, inter alia, the decryption of encrypted content data CD, i.e. the subscriber data stream SDS2.

The encryption function EN2 sends a request message R2 in order to request an encryption key or code K2 from the terminal T2, i.e. the chip TC1. The terminal T2 sends its encryption key K2 for example in an authentication certificate AC.

An authentication function AF, for example a program module of an authentication means AU, checks the authentication certificate AC in order to make sure that the terminal T2 is authorised to receive the subscriber data stream SDS2.

Furthermore, the encryption function E2 is encoding the subscriber content data for the subscriber data stream SDS2 with the key K2.

The encryption function EN3 uses a watermark WM to encrypt the content data CD of the subscriber data stream SDS3. The encryption function EN3 inserts the watermark WM into to content data CD and a watermark remove function WR of the terminal T3 removes the watermark WM that is a user specific or subscriber specific watermark of the terminal T3. If the watermark WM would remain the content data CD it would be visible at the display DIS of the terminal T3.

The watermark WM is stored in a permanent memory of the device D2, for example a non-volatile memory NM. The watermark WM is a user or subscriber specific watermark that may be configured via a configuration interface CF, i.e. a graphical user interface or a receiving unit for a configuration file for the configuration of the device D2.

The terminals T1, T2, T3 could also participate in a video conference and the content data in that scenario would be voice and video data of the participants of this conference. The device D2 can be a mixing unit for that video conference. Then, the device D2 encrypts subscriber specificially the video data prior sending it to the terminals T2, T3.

## Claims

1. Network node for a telecommunications network, the network node (R2, D2) comprising:
- receiving means (RB) for receiving a data stream (CDS) from a content source, in particular a content server (CS), of the network (NET),
- encryption means (EM) for individually encrypting said data stream (CDS) to a subscriber data stream (SDS1, SDS2, SDS3), the encryption being specific to a subscriber terminal (T1, T2, T3) being coupled or able to be coupled with the network (NET), and
- sending means (SM) for sending the subscriber data stream (SDS1, SDS2, SDS3) to the terminal.

2. Network node in accordance with claim 1 wherein the encryption means (EM) encrypt said subscriber data stream (SDS1, SDS2, SDS3) according to the standards of the Trusted Computing Platform Alliance (TCPA) and/or according to a Public Key Infrastructure (PKI).

3. Network node in accordance with claim 1 wherein the encryption means (EM) insert individual and/or generic watermarks (WM) into said subscriber data stream (SDS1, SDS2, SDS3) .

4. Network node in accordance with claim 1 wherein the encryption means (EM) are able to receive and preferably to request a respective encryption key from the subscriber terminal (T1, T2, T3) and/or from a key server.

5. Network node in accordance with claim 1 further comprising authenticating means (AU) for receiving and checking a respective authentication certificate (AC) from the subscriber terminal (T1, T2, T3).

6. Network node in accordance with claim 1 wherein the encryption means (EM) comprise storage means (NM) for permanently storing an encryption key (K1, K2) assigned to said subscriber terminal (T1, T2, T3).

7. Network node in accordance with claim 1 wherein said receiving means (RB) comprise decryption means (DM, DEC) for decrypting said data stream, whereby said data stream (CDS) is encrypted by said content source or another device of the telecommunications network (NET).

8. Network node in accordance with claim 1 comprising multicast distribution means for distributing the data stream (CDS) received from the content source as a first and at least one second subscriber data stream (SDS2, SDS3) to a first and at least one second subscriber terminal (T2, T3), whereby the encryption means (EM) individually encrypt said first and at least one second subscriber data stream (SDS2, SDS3), the encryption being specific to the respective first and at least one second subscriber terminal (T2, T3).

9. Module for a network node (R2, D2) of a telecommunications network (NET), the module (EN2, EN3) comprising program code executable by a processor of the network node (R2, D2), the module comprising:
- a receiving function for receiving a data stream (CDS) from a content source, in particular a content server (CS), of the network (NET),
- an encryption function for individually encrypting said data stream to a subscriber data stream (SDS1, SDS2, SDS3), the encryption being specific to a subscriber terminal (T1, T2, T3) being coupled or able to be coupled with the network (NET), and
- a sending function for sending the subscriber data stream (SDS1, SDS2, SDS3) to the terminal.

10. Distribution method for a telecommunications network (NET), the method comprising the steps:
- receiving a data stream (CDS) from a content source, in particular a content server (CS), of the network (NET),
- encrypting said data stream to a subscriber data stream (SDS1, SDS2, SDS3), the encryption being specific to a subscriber terminal (T1, T2, T3) being coupled or able to be coupled with the network (NET), and
- sending the subscriber data stream (SDS1, SDS2, SDS3) to the terminal.

## Amended claims

### Amended claims in accordance with Rule 86(2) EPC.

**1.** Network node for a telecommunications network, the network node (R2, D2) comprising:
- receiving means (RB) for receiving a data stream (CDS) from a content source, in particular a content server (CS), of the network (NET),
- encryption means (EM) for individually encrypting said data stream (CDS) to a subscriber data stream (SDS1, SDS2, SDS3) according to the standards of the Trusted Computing Platform Alliance (TCPA), the encryption being specific to a subscriber terminal (T1, T2, T3) being coupled or able to be coupled with the network (NET), and
- sending means (SM) for sending the subscriber data stream (SDS1, SDS2, SDS3) to the terminal.

**2.** Network node in accordance with claim 1 wherein the encryption means (EM) encrypt said subscriber data stream (SDS1, SDS2, SDS3) according to a Public Key Infrastructure (PKI).

**3.** Network node in accordance with claim 1 wherein the encryption means (EM) insert individual and/or generic watermarks (WM) into said subscriber data stream (SDS1, SDS2, SDS3).

**4.** Network node in accordance with claim 1 wherein the encryption means (EM) are able to receive and preferably to request a respective encryption key from the subscriber terminal (T1, T2, T3) and/or from a key server.

**5.** Network node in accordance with claim 1 further comprising authenticating means (AU) for receiving and checking a respective authentication certificate (AC) from the subscriber terminal (T1, T2, T3).

**6.** Network node in accordance with claim 1 wherein the encryption means (EM) comprise storage means (NM) for permanently storing an encryption key (K1, K2) assigned to said subscriber terminal (T1, T2, T3).

**7.** Network node in accordance with claim 1 wherein said receiving means (RB) comprise decryption means (DM, DEC) for decrypting said data stream, whereby said data stream (CDS) is encrypted by said content source or another device of the telecommunications network (NET).

**8.** Network node in accordance with claim 1 comprising multicast distribution means for distributing the data stream (CDS) received from the content source as a first and at least one second subscriber data stream (SDS2, SDS3) to a first and at least one second subscriber terminal (T2, T3), whereby the encryption means (EM) individually encrypt said first and at least one second subscriber data stream (SDS2, SDS3), the encryption being specific to the respective first and at least one second subscriber terminal (T2, T3).

**9.** Module for a network node (R2, D2) of a telecommunications network (NET), the module (EN2, EN3) comprising program code executable by a processor of the network node (R2, D2), the module comprising:
- a receiving function for receiving a data stream (CDS) from a content source, in particular a content server (CS), of the network (NET),
- an encryption function for individually encrypting said data stream to a subscriber data stream (SDS1, SDS2, SDS3) according to the standards of the Trusted Computing Platform Alliance (TCPA), the encryption being specific to a subscriber terminal (T1, T2, T3) being coupled or able to be coupled with the network (NET), and
- a sending function for sending the subscriber data stream (SDS1, SDS2, SDS3) to the terminal.

**10.** Distribution method for a telecommunications network (NET), the method comprising the steps:
- receiving a data stream (CDS) from a content source, in particular a content server (CS), of the network (NET),
- encrypting said data stream to a subscriber data stream (SDS1, SDS2, SDS3) according to the standards of the Trusted Computing Platform Alliance (TCPA), the encryption being specific to a subscriber terminal (T1, T2, T3) being coupled or able to be coupled with the network (NET), and
- sending the subscriber data stream (SDS1, SDS2, SDS3) to the terminal.
